# EUROPEAN PATENT APPLICATION

(11) **EP 4 804 563 A1**
(43) Date of publication of application: **09.09.2026**
(21) Application number: 26162038.9
(22) Date of filing: 03.03.2026
(51) Int. Cl.: H04R 25/00, G06F 3/0481

(54) **METHOD FOR FITTING A HEARING DEVICE TO AN END USER ACCORDING TO AN END USER PREFERENCE**

(30) Priority: 03.03.2025 EP 25161305
(71) Applicant: Sonova AG, 8712 Stäfa (CH)
(72) Inventor: SIGWANZ, Ullrich, 8712 Stäfa (CH); BIGGINS, Anna, 8712 Stäfa (CH)

(57) **Abstract**

Method for fitting a hearing device with a fitting software with a modified sound perception of sound types to an end user, the method comprising the steps of:
• Providing a chart (1) with a graphical interface and specific chart regions (8), wherein each specific chart region (8) is assigned to at least one specific sound type,
• Selecting a specific chart region (8) whose assigned specific sound type shall be processed such that its sound representation and thus its perception is to be modified,
• Selecting one option from a virtual toolbox (17) to alter a current value (16) that is responsible for a current functional representation of the at least one further isophone (5) in the selected specific chart region (8) to a new value (10) that is responsible for a new functional representation of the at least one further isophone (5),
• Calculating the second sound representation and thus the second perception based on the new functional representation of the at least one further isophone (5),
• Displaying the new functional representation of the at least one further isophone (5) in the chart (1) or in a further chart.

## Description

### TECHNICAL FIELD

The present invention is directed to a method for the adaptation of the transmission characteristic of a hearing device to the hearing impairment of the end user wearing that hearing device by using a data processing system having a display, whereby graphics can be displayed at the display.

### BACKGROUND

Hearing devices may be used to improve the hearing capability or communication capability of a user, for instance by compensating a hearing loss of a hearing-impaired user, in which case the hearing device is commonly referred to as a hearing instrument such as a hearing device, or hearing prosthesis. A hearing device may also be used to output sound based on an audio signal which may be communicated by a wire or wirelessly to the hearing device. A hearing device may also be used to reproduce a sound in a user's ear canal detected by an input transducer such as a microphone or a microphone array. The reproduced sound may be amplified to account for a hearing loss, such as in a hearing instrument, or may be output without accounting for a hearing loss, for instance to provide for a faithful reproduction of detected ambient sound and/or to add audio features of an augmented reality in the reproduced ambient sound, such as in a hearable. A hearing device may also provide for a situational enhancement of an acoustic scene, e.g. beamforming and/or active noise cancelling (ANC), with or without amplification of the reproduced sound. A hearing device may also be implemented as a hearing protection device, such as an earplug, configured to protect the user's hearing. Different types of hearing devices configured to be worn at an ear include earbuds, earphones, hearables, and hearing instruments such as receiver-in-the-canal (RIC) hearing devices, behind-the-ear (BTE) hearing devices, in-the-ear (ITE) hearing devices, invisible-in-the-canal (IIC) hearing devices, completely-in-the-canal (CIC) hearing devices, cochlear implant systems configured to provide electrical stimulation representative of audio content to a user, a bimodal hearing system configured to provide both amplification and electrical stimulation representative of audio content to a user, or any other suitable hearing prostheses. A hearing system comprising two hearing devices configured to be worn at different ears of the user is sometimes also referred to as a binaural hearing device. A hearing system may also comprise a hearing device, e.g., a single monaural hearing device or a binaural hearing device, and a user device, e.g., a smartphone and/or a smartwatch, communicatively coupled to the hearing device.

Advanced audio signal processing techniques have been developed to improve a hearing experience for users in various fields. For example, hearing instruments rely on audio signal processing to enhance auditory perception for individuals with hearing impairments.

Each hearing device needs to be tailored to the actual hearing impairment of the end user. That process is called "fitting" and frequently takes place at a hearing care professional (HCP) with a fitting software (FSW). The fitting software comprises a set of algorithms to program the settings of the hearing device such that the end user can profit as much as possible from her/his hearing device. That set of algorithms is referred to as fitting parameters.

The adaptation of hearing devices to the hearing impairment of the end user confronts the HCP with many different programming possibilities. These arise partly due to the various hearing device manufacturers, the number of available apparatus types and the many hearing device parameters that can be varied by control elements or by programming, i.e., by varying the value or values set in these devices. Originally hearing instruments disclosed their technical implementation by offering parameters like gains and automatic gain control- (AGC)-parameters with compression knee-points and compression ratios.

There have been several attempts to simplify the fitting process for the HCP in the past. DE44188203C2, for example proposed a first method that allows the HCP to directly modify parameters while changing their graphic representations in a level/frequency diagram.

Starting from about year 2010, an input level/frequency representation in form of an EXCEL-like table (also referred to a grid or matrix charts) became the quasi-standard in the industry for changing the gain relevant processing of hearing devices and formed a second method. This representation is used by most hearing device players in the industry with only slight deviations on grouping capabilities of the adjustment handles and levels that could be selected to change the hearing devices' sound processing. The denoted levels are always referred to either pure tone signals of a certain level, or spectrally separated components of speech levels. These grid-based tools for shaping the gain for (speech) levels has the big advantage for the HCPs of offering an understandable method to match audiological relevant speech targets. However, a substantial disadvantage of such a matrix resides in that it is difficult for the HCP to decide what value in what cell of the matrix has to be adjusted to derive the desired effect in the sound perception eventually.

US2013/0170661A1 discloses a further method where an HCP can select predefined sound samples that cannot be heard by the end user and move them to an audible sensory area where they can be heard by the end user.

Although the above-mentioned methods above made it easier for the HCPs to change the processing of hearing devices, the selection via frequency ranges and level ranges is still indirect and forms a detour. Particularly when the HCPs wanted to change the gain for input signals above or below the denoted speech levels, the HCP was limited to the choice of having a compromise of easy access to speech reproduction and inefficient or the choice of an opaque/ambiguous gain-shaping for signal outside the offered range of speech levels. Moreover, it remained hard to track the effect of any alterations of sound representations and thus sound perceptions of an unspecific auditory sensation area displayed in a chart for the HCP.

The above methods also often suffer from the fact that characteristics processing is solely displayed either as gain or as output graphs. Output graphs mostly allow alternative representations in dB sound pressure level (SPL) or dB hearing level (HL) but lack the capability to directly relate the hearing device processing to the listening experience of the end user. In addition, it required the HCP to dig deep into fitting software settings, if the HCP was asked to further adjust the hearing device performance in specific sound situations that are desired by the end user. In other words, a satisfactory tailoring of the hearing device to the end user was still very challenging and time-consuming such that some HCPs opted to skip such fine tuning for time or other reasons that led eventually to a suboptimal solution for the end user.

Summing up, the HCPs were forced to develop skills to indirectly compensate for the hearing capabilities of a client. HCPs had to deal with three opaque areas when adjusting hearing devices.
- They had to translate the "perceptually colored" input of a client (or client complaint) to a solution space of frequency and input level. The term perceptually colored denotes the considerations of user-specific preferences, amongst others with respect to sounds or sound types other than speech. An exemplary sound type is the sound of a user's telephone or a doorbell.
- They had to try relating this solution space into the space of mapped speech levels and frequencies.
- They had to select areas and levels within these "speech perception field" and adjust the level in these areas, hoping to have tackled the described problem correctly.

Especially the third point typically involving a time-consuming try and error iteration to arrive at a fair or satisfactory sound perception solution for the end user was lacking at least some predictability on the outcome of a modification of the auditory sensation area and the resulting sound representation by the hearing device and was therefore conceived as very dissatisfactory.

Although the advent of artificial intelligence in hearing devices and their fitting allows many things that have not been possible before, the demand of the HCPs for a specific modelling of context-dependent and individual sound type output preferences along with the compensation of the hearing impairment during the fitting process remained unmet.

By now, the number of technical programming possibilities is ever increasing. That led to an overwhelming by the HCPs which are asking for a simpler method to fit and tailor the hearing devices to an end user without requiring that the HCP knows all factors of the fitting software that would enable an ideal programming of the hearing device.

Hence, it is an object of this application to meet the HCPs demand for a simplified fitting method that still allows for a tailoring of the sound processing of individual sound types depending on the end user's sound preferences and sound perceptions while conferring the HCP with feedback on the impact of any alterations of sound types and their sound perceptions.

### SUMMARY

That object is met by a method for fitting a hearing device to an end user according to an end user preference by modifying a sound representation and thus a sound perception of sound types for the end user. Sound types are occasionally referred to as sound objects in audiologic literature. The method comprises the steps of:
a) Providing a fitting software running on a computer device. The computer device can be a smart phone, although the HCP prefers working with a personal computer for running the fitting software because it is more convenient and has a larger screen than that of mobile devices.
b) Providing a chart with a graphical interface and a plurality of specific chart regions that are arranged in a reference system of the fitting software, wherein each specific chart region is assigned/attributed to at least one specific sound type and is extending over a frequency range and an auditory level range. The specific chart region forms an auditory sensation area whose at least one further isophone illustrates its contribution to the first sound representation and thus the first sound perception by the end user of the at least one specific sound type attributed to that specific chart region. The chart region may comprise spoken sound types, non-spoken sound types, music or a mixture thereof.
c) Selecting any specific chart region in that chart where the first sound perception of the at least one specific sound type shall be modified to a second sound perception of the at least one specific sound type for the end user. The second sound perception denotes the acoustic perception of a sound by the end user once the sound input from the at least one sound type in the selected specific chart region is processed and fed to the end user by the hearing device. There are several options available to select the specific chart region as will be disclosed below in more detail.
d) Activating on the graphical interface a virtual toolbox comprising at least one option to alter the current functional representation of the at least one further isophone that is responsible for the first sound representation of the selected specific sound type attributed to the selected specific chart region and thus the first sound perception of the at least one specific sound type. The virtual toolbox is presented to the HCP by the fitting software by way of a guided user interface (GUI).
e) Selecting one option from the options of step d) in the virtual toolbox to alter a current value that is responsible for the current functional representation of the at least one further isophone in the selected specific chart region to a new value that is responsible for a new functional representation of the at least one further isophone.
f) Adjusting the current value to the new value. The current value can be a preset value of the hearing device at the time it arrives at the HCP to be fitted to the end user or can be the value of a previous adjustment or adjustment trial in the fitting process.
g) Calculating a second sound representation of the at least one specific sound type attributed to the selected specific chart region and thus the second sound perception of the at least one specific sound type based on the new functional representation of the at least one further isophone with the new value.
h) Displaying the new functional representation of the at least one further isophone in the chart or in a further chart.
i) Defining a new set of fitting parameters for the hearing device by the fitting software in consideration of the new functional representation of the at least one further isophone,
j) Transmitting the new set of fitting parameters from the fitting software to the hearing device and storing it in the hearing device.

A major advantage of the present method resides in that it is suitable for different types of hearing devices employing different technologies, each.

The chart comprises at least two specific chart regions. The chart can have various forms. One embodiment of such a chart is a matrix whose cells comprising a series of input level/frequency representations and output level/frequency representations. Such a matrix can look like an Excel table whose cells comprise alterable values for the functional representation of a further isophone. If several further isophones shall be displayed, the matrix may have a separate row for each isophone. The columns of that matrix may denote nodes of the functional representation of the isophones at a dedicated frequency, for example at 250 Hz, 500 Hz, 1 kHz, 1.5 kHz, 2 kHz, 4 kHz, for example. The number of the functional representations of isophones may vary depending on the embodiment of the chart and the requirement for fine tuning the fitting process.

Another embodiment of a matrix-type chart represents the gain for a predefined input sound level for a frequency range given in its matrix cells.

Yet another embodiment is a sound pressure level diagram, also known as an SPL-o-gram where the levels are indicated by dB SPL. Yet another embodiment of such a chart is formed by a so-called aided audiogram.

Isophones are curves of points where an end user perceives the sound over the frequency spectrum as being of equal loudness. In other words, the isophones describe which sound pressure level is required for a single sound (say a tone) at which frequency to achieve the same impression of loudness in people. An isophone is not to be confused with a technical sound output level curve of a hearing device based on a stimulus. In the present invention the functional representation of the at least one further isophone attributed to at least one specific sound type is modified to come to lay in another place of the chart or a/the further chart.

A first main isophone depicts the hearing threshold level curve (HTL) that results from the hearing impairment. A second main isophone depicts the discomfort threshold level curve (UCL) of the end user having an impaired hearing. Depending on the type of the chart, these "isophone curves" are not displayed as a graph but as a series of numerical levels for example in case of the matrix-type chart. In an aided audiogram, the isophones can be displayed in a graphical curve, each.

It is helpful if the chart also comprises a third main isophone that represents the most comfortable loudness level curve (MCL). The space between these main isophones is populated with a plurality of further isophones that run about parallel between these main isophones. In case of a chart in the form of an aided audiogram, not all further isophones may be indicated graphically to prevent the HCP from excessive information that makes it difficult to derive any changes resulting of the adjusted new value out of the chart after the step of modelling and displaying the change. The term modelling involves the use of at least one algorithm and a calculation step.

In case the chart is an aided audiogram, the displaying of the modified isophone that is responsible for the new functional representation of the at least one further isophone and thus the second sound representation and the second sound perception will lead to a display of at least one further isophone that is extending through the selected specific chart region or is reach into the selected specific chart region selected. In that case, the step of displaying involves a displaying of at least one further isophone that is extending through the selected specific chart region or reaching in the selected specific chart region. Depending on the magnitude of the new value entered, additional further isophones that are running proximate to the selected specific chart region may have to be affected to prevent an undue distortion of the sound perception to the end user.

A sound type is understood as the sound issued by a sound source like a dog, a sledgehammer, a telephone, a bird, a doorbell, for example and can vary in its hearing level and frequency.

The sound representation and thus the sound perception can be modified by altering the current value assigned to the at least one isophone such that it leads to a more prominent (louder) or less prominent (smoother/more silent) sound perception by the end user, for example.

The guided user interface of the toolbox can trigger a pulldown menu offering at least one option for an adjustment. A more advanced embodiment of the method offers the HCP multiple options to adjust the values, each. In such a case, the entirety of values will hereinafter still be referred to as a value. The toolbox can be a permanent menu on the graphical interface display in some embodiments, while more options can pop up upon a left or right-side mouse button click, for example.

If the chart is an aided audiogram, the adjustment of a current value in the current functional representation of the at least one further isophone to a new value may reside in increasing or lowering a boundary element of the selected specific chart region relative to its original hearing level before the step of the adjusting to a new value. In other words, the new functional representation of the at least one further isophone in step h) displays a new shape and/or a new position of the at least one further isophone that is extending through the selected specific chart region or reaching in the selected specific chart region. In a basic embodiment, the new value may cause a shift of the new functional representation of the at least one isophone that extends into or leads through the selected specific chart region in the power level (gain). In a more advanced embodiment having a lower and an upper boundary element of the selected specific chart region, it is possible to alter the power level of each boundary element separately, for example. As a result, it becomes possible to squeeze the power level range of the isophones in the selected specific chart region such that the power level range of the new functional representation of the isophones becomes smaller or bigger compared to the power level range of the current functional representation of the isophones before the alteration of the value. Note that the selected specific chart region can be located between the HTL and the MCL curve, between the MCL and the UCL curve. In other embodiments, the selected specific chart region is extending vertically over at least one of the HTL, the MCL and the UCL. In this case, the adjustment of the existing value to a new value will likely lead to an adjustment of the HTL/MCL/UCL level curve as well.

Having a chart in the form of an aided audiogram is favored by many HCPs since it is a particularly elegant way to indicate and display the effect of the adjustments graphically. In that case, the step of displaying involves a modelling of at least one further isophone that is extending through the selected specific chart region or reaching in the selected specific chart region. Depending on the magnitude of the new value entered, also further isophones that are running proximate to the selected specific chart region may have to be affected to prevent an undue distortion of the sound representation and thus the sound perception to the end user.

There are several possibilities available to select the specific chart region by way of a graphical member of the following group:
a) A circle
b) A triangle
c) A trapezoid,
d) An ellipsoid
e) A rectangle
f) A rounded rectangle
g) A freestyle shape.

Exemplary freestyle shapes possible are a lasso, a doodle, a honeycomb, a rhomboid, an ensign or a flag. A particularly convenient way of selecting the graphical member is available by using a mouse click command, that is a curser selection. As is known from other MS-Office or other software, one can start a free-hand form or a pre-defined form by a mouse click and by keeping the mouse button pressed, followed by a move of the mouse cursor to the desired position and a subsequent release of the pressed mouse button.

Since the computer device is typically a fitting computer that is connected to input devices such as a mouse and a keyboard, a convenient and thus preferred option for the HCP to select the specific chart type is by a cursor selection.

A fast and thus particularly convenient way to adjust the graphical member is achievable by way of hitting the standard cursor control buttons on the keyboard of the computer device. In another embodiment of the method, the pull-down or pull-up control, or buttons like the ones on a keyboard can be presented by the toolbox on the graphical interface wherein these icons/buttons on the graphical interface are controlled by one or several clicks of the mouse cursor. Yet another alternative is formed by a cursor-controllable control wheel, for example.

A quick, yet precise way of selecting the specific chart region is available if the graphical member is adjustable by a computer mouse-controlled cursor in that a boundary element of the specific chart region is dragged from an old position to a new position. The old/current position and the new position imply the current value and the new value, respectively, of the proposed new method according to this document. This is a very intuitive way of selecting, creating or modifying an area with a rectangular shape in MS-PowerPoint or other common office software programs and requires only very little training for the HCPs.

As mentioned above, the HCP can be presented not only one option to alter the value but a plurality of options. There can be situations where some options may make technical more sense than other options. If so, the fitting software may be programmed such that it does only offer options to modify the sound representation and thus the perception of the selected specific sound type that makes sense in that peculiar specific chart region and/or that does not contradict with another condition. In any case, the virtual toolbox comprises at least one of the following options for a sound modification function:
a) A frequency compression,
b) An adaptive function,
c) An acoustic optimization performed by a neural network,
d) Static gain shaping means.

The adaptive function can be a noise reduction, a soft speech enhancement or the like. The static gain shaping means comprises at least one of an amplifier and an adjustable compression knee-points within processing channels. As mentioned earlier on, a multiple-choice selection by the HCP shall be possible.

The fitting process is less strenuous for the HCP's eyes, if the specific chart region is graphically highlighted in the chart once it is selected in the step of selecting the specific chart region whose assigned specific sound type shall be processed by the hearing device such that its first sound representation and thus the first perception is to be modified to a different, second sound representation and thus a second sound perception. The fitting process is less strenuous for the HCP's eyes, if the specific chart region attributed to a specific sound type is graphically highlighted in the chart once it is selected in the step of selecting the specific chart region whose assigned specific sound type shall be processed by the hearing device such that its first sound representation and thus the first perception is to be modified to a different, second sound representation and thus a second sound perception. The highlighting can be a colored mark-up of the identifier representing a chart region or a cross-hatched area in the chart, a square in the diagram, a bubble or a doodle in the chart or the like.

The selection process of the specific chart region whose assigned/attributed specific sound type-related sound perception shall be modified is quicker and can be more precise if the at least one specific chart region in the chart is tagged with an identifier that graphically represents a sound source of a specific sound type. The selection of the specific chart region is activatable by selecting the identifier. If the identifier is a graphic icon displayed in the chart that stands for a specific sound type, then the selection is particularly easy and straightforward for the HCP. Graphic icons that are attributed to the kind of specific sound type or content type are preferred, for example a piano icon for piano music, a motorbike for motorbike engine noise, a telephone for a ring tone indicating incoming calls, a doorbell and the like.

In an advantageous embodiment of the method, the current functional representation of the at least one further isophone that is responsible for the first sound representation and thus the first sound perception of the at least one specific sound type in that selected specific chart region before the alteration of current value to the new value took place is displayed along with the new functional representation of the at least one further isophone after the alteration to the new value for at least a limited amount of time. Depending on the needs of the HCP, it is possible to display the functional representation of the at least one further isophone before and after the alteration to the new value. That enables the HCP to compare the impact/effect of the second sound representation and thus the second sound perception with the first sound representation and thus the first sound perception for the specific sound type or the specific sound types attributed to the selected specific chart region. In a slightly different embodiment of the method, the functional representation of the at least one further isophone with the current value before the alteration to the new value is displayed along with the functional representation of the at least one further isophone with the new value only for a predefined amount of time, for example one minute, and removed from the chart or the further chart thereafter to keep the chart as unobstructed and as clear as possible for further modifications of the sound representation and thus the sound perception of the same sound type or the same sound types, or of another sound type or other sound types.

Note that it is possible that the specific chart region selected by the HCP comprises several sound types. In an extreme example, all sound types are selected if the HCP declares the entire chart as the specific chart region. In such an example, the HCP could adjust the sound level of all isophones responsible for all sound types and sound representations in the chart in one go, and increase their power level by 2 dB, for example.

If the chart is an aided audiogram, then a particularly helpful embodiment for the HCP is formed if it has a plurality of graphic icons forming the identifier, for example a faucet for water noise, a dog for dog bark, a mower for machine sound, a piano for piano music, a motorbike for high pitch engine noise, a telephone for ring tones, a vacuum cleaner for common household appliance noise, a clock for clockwork ticking, a leaf for rustling tree leaves, whispering people, a bird for bird sound and the like. Many HCPs are already familiar with such graphical icons in aided audiograms and would not like to miss them.

Although it might be beneficial to the HCP to have as many graphic icons as possible for as many different specific sound types, it is recommendable to keep the number fair to prevent the chart from getting overloaded such that the HCP has difficulties in deriving the essence and the effect of the adjustments out of it.

Depending on the embodiment of the fitting software, the HCP may be allowed to add additional identifiers and/or icons representing further sound sources and sounds that form sound types, too.

In case the chart is an aided audiogram, it will be helpful to the HCP if the fitting software tells him via the graphical interface the values or the position of at least one further isophone that runs through the selected specific chart region prior to altering the current value in the first sound representation and thus the first sound perception before the modification as well as the outcome of the modified second sound representation and thus the second sound perception of the audio input caused by the sound type or sound types attributed to the selected specific chart region after the alteration of the current value to the new value in the chart. That way, the HCP can derive a visual comparison of the before-after situation with respect to the values used. If the HCP and the end user are satisfied with the second sound perception in the chart or in a further chart, then he and the end user can conclude the fitting process. If he and the end user are not satisfied with the second sound perception in the chart or in a further chart, then the optimizing process via the adjustment of current parameters should continue until a satisfactory solution is found.

Although the method may comprise one chart for displaying the current setting with the values of the current functional representation of the at least one further isophone before the modification of the sound representation and thus the sound perception and a further, separate chart for displaying the current setting for the second sound representation and thus the second sound perception, it may be more convenient if the effect of the modification is displayed in the very same chart since such a display would ease the immediate detection of even small changes resulting of the modification of the value.

Especially in case the chart is an aided audiogram comprising graphic symbols forming identifiers that stand for different sound types, there will be specific chart regions that are located at a distance from one another as well as there will be specific chart regions that overlap one another. In case of the former, an individual calculation and display of the sound perception (sound form) and an individual shaping of the new functional representation of the at least one further isophone is possible.

In case of the latter, where there are two specific chart regions that overlap one another in the chart, it is advantageous if the degree of freedom to alter the existing/current value to the new value is limited. Limitations for the new value restrict the range of choices for the new values and thus the range of possibilities for the position and/or shaping of the new functional representation of the at least one isophone in the overlapping area of the selected specific chart region. The limitation is pre-programmed in the fitting software and prevents the HCP from altering the current value to an excessive new value that may cause an abrupt change of the hearing level in the at least one isophone within a very small frequency range. In other words, harsh and abrupt power level differences in the same functional representation of the further isophone lead typically to an odd second sound representation and thus a second sound perception that would be perceived as awkward or unnatural by the end user can be avoided or at least mitigated.

To smoothen the sound representation and thus the perception of sound at a hearing level and a frequency of sounds in the area of the at least one further isophone extending through or reaching in the selected specific chart region in a case where the chart is an aided audiogram, it is recommended to apply a sound mitigation measure that prevents an odd or unnatural sound representation and sound perception to the end user. In case that the selected specific chart region overlaps with a neighboring chart region belonging to another sound type or to other sound types in an overlapping region, the fitting software is programmed such that it establishes a transitional adaptation of the new functional representation of the at least one further isophone in a transition frequency range at a border zone of the selected specific chart region. The transitional adaptation is designed by the fitting software such that it connects a first portion of the at least one further isophone that is located outside the selected chart region and that is only partially affected by the adjustment of the current value to the new value with a second portion of the same at least one further isophone that is extending through or into the selected chart region where the new functional representation of the at least one further isophone changed more substantially than outside the of the selected specific chart region and such that an inclination of the new functional representation of the at least one further isophone at the border zone is kept below a predefined threshold. The smaller the jump from one hearing level to another hearing level of the further isophone within a comparatively small transition frequency range is, the less harsh and more normal the sound perception will be perceived by the end user.

The transitional adaptation of the new functional representation of the at least one further isophone may be reached by way of a weighting process of at least two weighting parameters. Other mathematical scenarios such as gradually adjustment or a mean value or linear change from one hearing level to another hearing level from a further isophone is conceivable if the required calculation capacity is available.

Depending on how harsh, how soft and over what transitional frequency range a transitional adaptation of the new functional representation of a further isophone extending through or reaching into the selected chart regions shall be, there are several options available. In a first option, the transitional adaptation is performed to the new functional representation of the at least one further isophone in a transitional frequency range of the border zone that is outside the selected specific chart region. In a second option, the transitional adaptation of the new functional representation of the at least one further isophone is performed in a transitional frequency range of the border zone that is outside the selected specific chart region. That option may be less suitable for selected chart regions that extend only across a comparatively small transitional frequency range because it could lead to a harsh rise or decline of an isophone and the new functional representation of the at least one further isophone. A predefined limitation of a maximum value for the new value may be suitable for such cases. In a third option, the transitional adaptation is performed to the new functional representation of the at least one further isophone in a transitional frequency range of the border zone that is inside as well as outside of the selected specific chart region at the border zone of the selected specific chart region. The term "inside" as well as "outside" is understood as a border zone transitional frequency range within which the change from the hearing level of a neighboring transitional frequency range to an adjusted hearing level that was modified due to the new value or values takes place.

Once the HCP and the end user agree that the second sound representation leads to a second sound perception that meets the preferences of the end customer, the fitting process can be concluded. In a subsequent step, the fitting software defines the fitting parameters for the hearing device in consideration of the new functional representation of the at least one further isophone. Next, the new set of fitting parameters is transmitted from the fitting software to the hearing device and stored in a memory unit of the hearing device or in both hearing devices in case of a bilateral hearing system. The fitting parameters can be values stored in a look-up table that are obtained by the hearing device when processing the sound input with an in-built set of algorithms or can be the algorithms themselves. The transmission of the parameters or fitting values from the fitting software to the hearing device may take place wirelessly, e.g., via a Bluetooth or Bluetooth LE connection, or via a cable connection, for example. The transmission may be indirect, for example via a cloud, a server that is connected to an HCP that is located somewhere else, for example.

In an embodiment of the method disclosed herein, the reference system of the fitting software further comprises a functional representation of at least two further isophones or functional representations thereof with the hearing level of a person with standardized normal hearing. ISO 7029:2017 defines the hearing level of a person with normal hearing. In the exemplary embodiment of the chart being an audiogram, the audible sensory area of a person with normal hearing would be between a first baseline of about 0 to about 40 dB for young adults and a second baseline for the discomfort threshold level (UCL) of about 90 to about 105 dB. These two additional isophones enable a comparison of the sound perception of specific sound types for the end user with the impaired hearing to the sound perception of the specific sound types for the person with the normal hearing is enabled.

A hearing device that is fitted according to individualized end user preferences with respect to at least one sound perception of at least one sound type with a method such as explained above is of higher use to an end user than a hearing device that was fitted to the end user conventionally and with the drawbacks mentioned in the introductory section of this disclosure.

### BRIEF DESCRIPTION OF THE DRAWINGS

Next, the present invention is explained and illustrated by way of representative examples shown in the drawings. The illustrated embodiments shall not limit the scope of the disclosure. Identical or similar reference numbers are used to designate identical or similar elements.

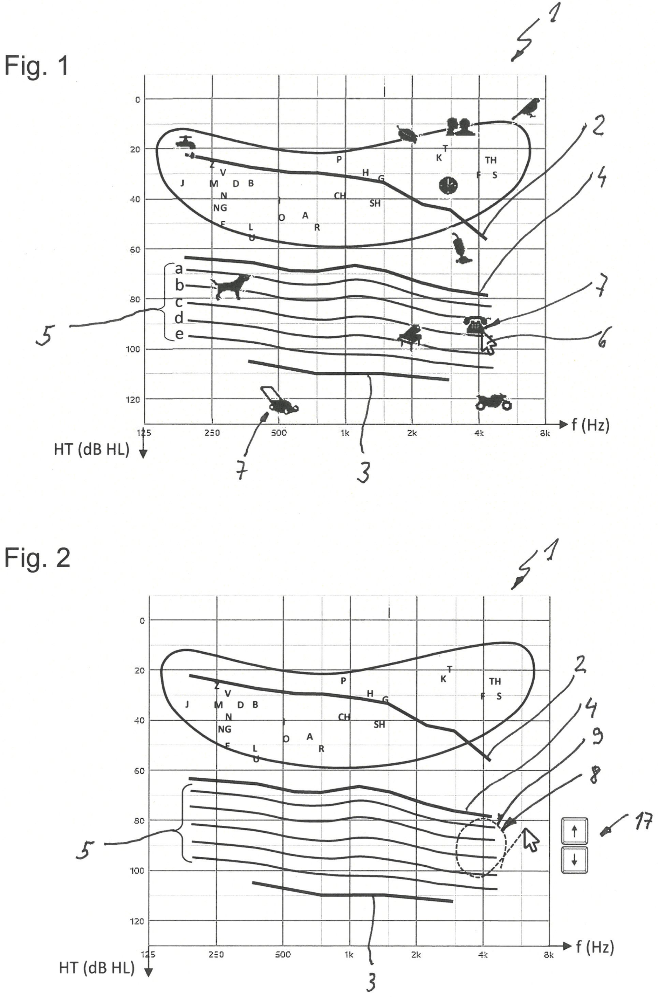

- Fig. 1: schematically illustrates an aided audiogram, comprising a functional representation of a HL curve, a functional representation of a MCL curve, a functional representation of a UCL curve forming the main and additional isophones and a plurality of further isophones extending about parallelly between the MCL and UCL isophones before a first execution of the method promoted in this disclosure;
- Fig. 2: schematically illustrates an aided audiogram that is similar to the one shown in Fig. 1 but without identifiers of specific sound types formed by graphic icons, wherein a specific chart region was selected by a freehand doodle by way of a mouse cursor on the graphical interface;

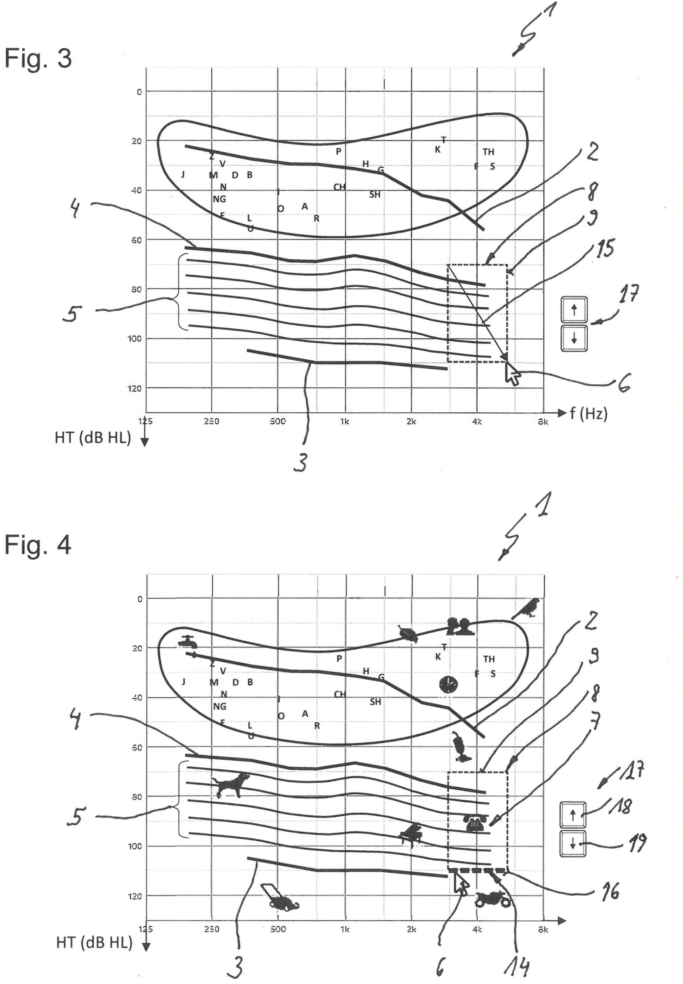

- Fig. 3: schematically illustrates an aided audiogram that is similar to the one shown in Fig. 1 but without identifiers of specific sound types formed by graphic icons, wherein a specific chart region was selected by a mouse cursor controlled dragging of a rectangular area on the graphical interface;
- Fig. 4: schematically illustrates the aided audiogram shown in Fig. 1 wherein the HCP selected the graphic icon "telephone" via the mouse cursor of the computer mouse such that a specific chart region comprising portions of the further isophones that in the auditory sensation area that relate to the current functional representation of the specific sound type "telephone" is displayed and whereas a boundary element at the lower end of the specific chart region is activated;

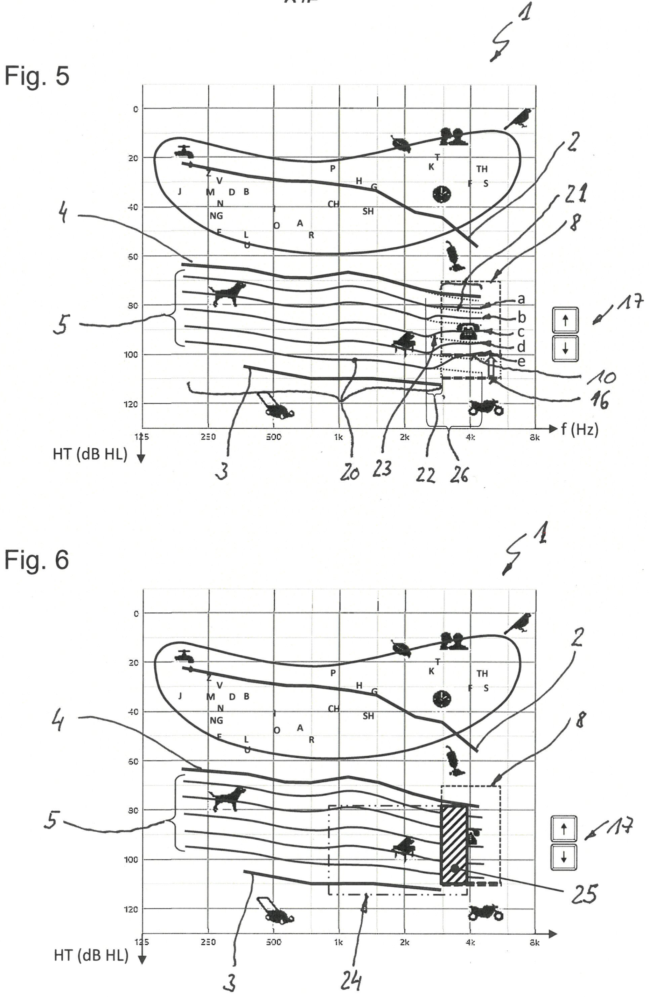

- Fig. 5: schematically illustrates the aided audiogram shown in Fig. 1 wherein the HCP selected the graphic icon "telephone" via the mouse cursor of the computer mouse such that a specific chart region is displayed and whereas a lower boundary element of the specific chart region was moved to a new power level in the chart, wherein a modelling of a second sound representation by the new functional representation of the further isophones extending into the selected specific chart region is displayed in the chart;
- Fig. 6: schematically illustrates an aided audiogram similar to the one shown in Fig. 4 but now showing an overlap of the specific chart regions if one compares an activated first specific chart region representing the sound type of a phone and a second specific chart region representing the sound type of a piano;

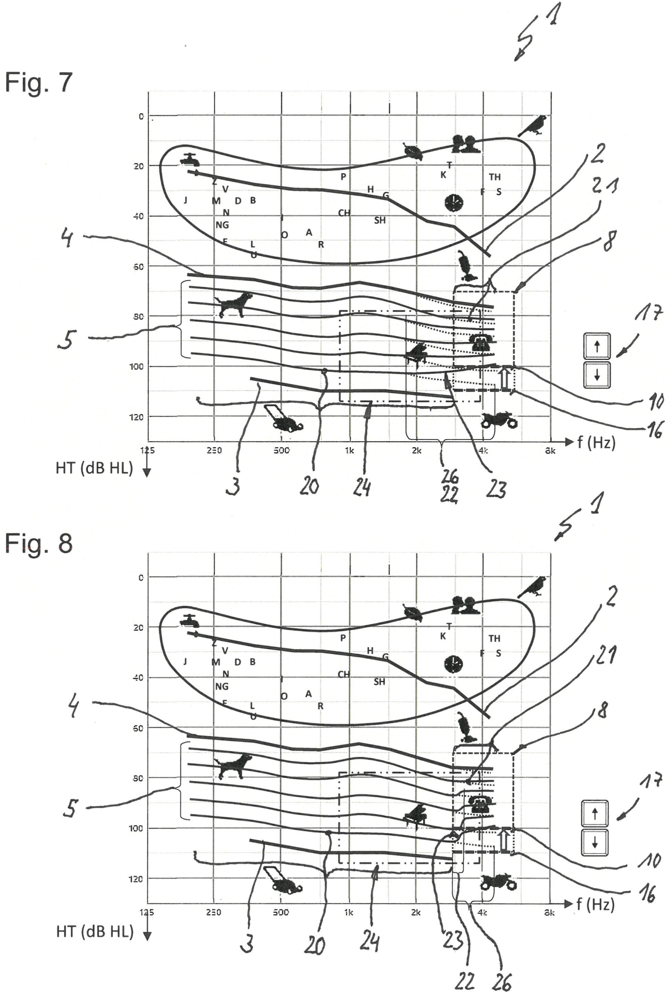

- Fig. 7: schematically illustrates the aided audiogram shown in Fig. 6 after altering the current value of the lower boundary element of the specific chart region to a new value, wherein the further isophones underwent a transitional adaptation of their shape inside as well as outside of the selected chart region at the border zone of the selected chart region;
- Fig. 8: schematically illustrates the aided audiogram shown in Fig. 6 after altering the current value of the lower boundary element of the specific chart region to a new value, wherein the further isophones underwent a transitional adaptation of their shape inside the selected chart region at the border zone of the selected chart region only; and

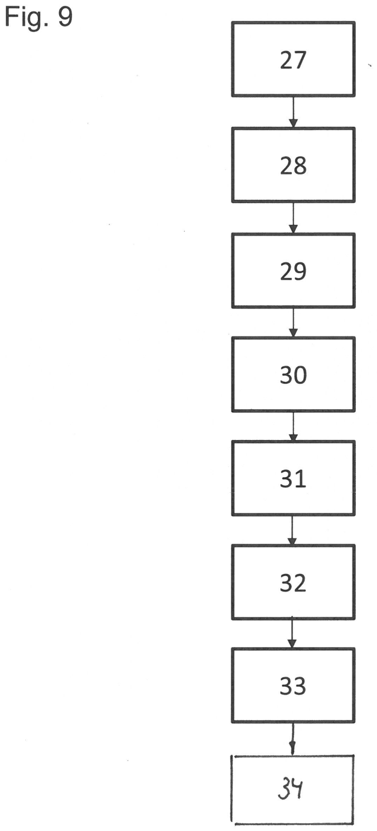

- Fig. 9: schematically illustrates the flowchart of a basic embodiment of the method promoted in this document.

### DETAILED DESCRIPTION OF THE DRAWINGS

**Figure 1** shows a chart 1 with a reference comprising a representation of at least two isophones of the hearing level of a person with normal hearing according to ISO 7029:2017. That chart 1 further shows a so-called speech banana. The speech banana is a banana-shaped region where the sounds (phonemes) of human languages appear on an audiogram. The audiogram is a graphical representation of someone's ability to hear over a range of frequencies and loudness levels. Hearing on an audiogram is displayed as frequency in Hertz on the horizontal/x-axis and loudness in decibels on the vertical/ y-axis. In the present case, the y-axis denotes the hearing level HT in decibels (dB) starting at the top at 0 dB standing for a theoretical end user that perceives all sounds at all frequencies to be at the same loudness level. The y-axis is pointing towards the bottom where loudness levels (power levels) are located that relate to sound types that are loud and to hearing levels of an end user having a profound hearing impairment.

The chart is displayed on a graphical interface (here a computer screen) on a computer device (not shown) and is controlled by a fitting software running on that computer device. The computer device is a personal computer with a fitting software installed on it that renders the computer device into a fitting computer. The computer device is connected to a mouse to control a cursor 6 on the graphical interface as well as to a standard keyboard to allow the hearing care professional (HCP) a communication and a control of the fitting software.

A first main isophone depicts the hearing threshold level curve 2 (HTL) that reflects the hearing impairment of the end user wearing the hearing device. A second main isophone depicts the discomfort threshold level curve 3 (UCL) of the end user. The chart 1 also comprises a third main isophone that represents the most comfortable loudness level curve 4 (MCL). The space between these main isophones is populated with a plurality of exemplary further isophones 5 that run about parallel between these main isophones. Since the chart 1 is an aided audiogram, the functional representation of the further isophone is displayed as a curve, each. The number of further isophones is unlimited. The term "parallel" is to be understood as follows and explained in the example shown in Fig. 1: The distance between HTL and MCL is bigger at a frequency of 250 Hz than at a frequency of 4 kHz. As a result, the distance between a further isophone to a neighboring further isophone is bigger at a frequency of 250 Hz than a distance between the same further isophone to the same neighboring further isophone a frequency of 250 Hz.

It is now possible to amend the progression of the further isophones as well as the main isophones HTL, MCL, UCL - at least to some extent. However, all these isophones are linked to neighboring isophones such that a modification of one isophone or further isophone will lead to a modification of the progression of the other isophones - at least of those isophones that are located proximate to the isophone that underwent a modification. Explained alternatively, one can describe the isophones as lines drawn on a thin rubber sheet. If one picks any point of that rubber sheet with a pair of tweezers and moves that point to another relative position on that rubber sheet, the lines that are close to the point picked will undergo a local displacement in an area of the point picked. The farther away a portion of the line from the point picked is, the smaller the local displacement of that portion of the line is, if there is any substantial displacement at all.

Returning to Fig.1, we have drafted a representative and exemplary set of further isophones 5. That set comprises five representative further isophones 5 a-e. The number of five isophones was chosen deliberately low to prevent the chart from becoming overloaded and unreadable for the purpose required. Depending on the size of the selected specific chart region and/or its magnification, it is possible that more than five further isophones displayed in the chart, or that there are less than five further isophones displayed in the chart.

In case of a chart in the form of an aided audiogram, not all further isophones may be indicated graphically to prevent the HCP from excessive information that makes it difficult to derive any changes resulting of the adjusted new value out of the chart after the step of modelling and displaying the change. Hence, it is beneficial to indicate only those further isophones that extend into or extend through the selected specific chart region.

The aided audiogram 1 further comprises a plurality of graphic icons 7, for example a faucet for water noise, a dog for dog bark, a mower for machine sound, a piano for piano music, a motorbike for high pitch engine noise, a telephone for ring tones, a vacuum cleaner for common household appliance noise, a clock for clockwork ticking, a leaf for rustling tree leave sound, whispering people, a bird for bird sound and the like. Many HCPs are already familiar with such graphical icons in aided audiograms and know what they stand for. Each one of these graphic icons represents sound types in their dedicated specific chart region. At this stage, the borders of the plurality of specific chart region are not shown, yet.

In the present case, let us assume that the end user that asked the HCP to fit his pair of hearing devices such that the effects of his hearing impairment is mitigated while he is asking the HCP to tailoring the sound processing of the ring tones issued by his phone such that it meets the end user's preferences with respect to the sound perception better compared to a set of standard parameters calculated by the fitting software based on the hearing impairment only and that produce a standard sound perception only. In our case, the end user brought his phone along to the fitting session such that the HCP can run tests with the end user's phone ringing and the user perception.

In a first step, the HCP selecting the specific chart region whose assigned specific sound type of the phone ringtone shall be processed by the hearing device such that its original, first sound representation and thus its first sound perception is to be modified to a second sound representation and thus a second sound perception for the end user that differs to the first sound perception. This is done via the cursor 6 hovering over the graphic icon of the phone (hereinafter denotes with reference character 7) followed by a mouse click selecting the specific area 8 of ringtone sounds issued by a classic telephone.

**Figure 2** shows an alternative way of selecting a specific chart region. Fig. 2 also shows the chart 1 with the aided audiogram that is like the one shown in Fig. 1. However, different to the chart of Fig.1, no sound identifiers formed by graphic icons are displayed on the graphical interface/screen of the computer device. In this case, we assume that the HCP is an experienced HCP that recognizes from the top of his head in what chart region the ringtones of his end user's phone are in the chart such that the HCP can select the specific chart region without the assistance of a graphic icon. In this case, the HCP hovers the cursor 6 to a point in the chart of about 100 dB and about 5 kHz, keeps the mouse button pressed and draws free-handed a graphical member 9 encircling the specific chart region where he wants to modify the sound representation of the sound type according to his end user's preference by a freestyle shape in the form of a doodle. When about closing the doodle, he releases the mouse button when the cursor 6 is a position of about 85 dB and 6 kHz. The fitting software is programmed such that it can recognize the specific chart region 8 even if the freestyle shape (here the doodle) is not perfect and the beginning and ending portions of the boundary element 14 is exceeding the closed surface of the graphical member 9 at its ends. In Fig. 2, the graphical member 9 is displayed by way of a graphically highlighted dashed line. The dashed line delimits the closed area of the specific chart region 8 within the doodle such that the specific chart region 8 inside that doodle is defined and selected. In a modified embodiment, the graphical highlighting of the specific chart region can be different, for example by a colored steady line, a coloring of the specific chart region, a dotted line or some other graphical means.

**Figure 3** shows a further alternative way of selecting a specific chart region. Fig. 3 also shows the chart 1 with the aided audiogram that is like the one shown in Fig. 1. However, different to the chart of Fig.1, no sound identifiers formed by graphic icons are displayed on the graphical interface/screen of the computer device. In this case, we assume that the HCP is again an experienced HCP that recognizes from the top of his head in what chart region the ringtones of his end user's phone are in the chart such that the HCP can select the specific chart region without the assistance of a graphic icon. In this case, the HCP hovers the cursor 6 to a point in the chart of about 70 dB and about 3 kHz forming the start/current position/value in the method disclosed in this document, keeps the mouse button pressed and drags the cursor such that he draws free-handed a virtual diagonal 15 to a point/position in the chart of about 110 dB and 5.5 kHz forming the new value where he releases the mouse button such that the specific chart region 8 is defined and selected. As one can see, the points in the chart do not need to be extremely precise to select the correct specific chart region. The accuracy of the selection of the specific chart region in the chart by the cursor can be tuned in the fitting software to derive a sound balance with respect to the effort for the HCP to select the desired specific chart region.

**Figure 4** shows the aided audiogram shown in Fig. 1. Since the HCP selected the graphic icon "telephone" 7 via his mouse cursor 6 of the computer mouse, the fitting software shows him the specific chart region 8 that pertains/is attributed to the ringtone sounds of a telephone. The dashed line delimits the area of the specific chart region 8. In Fig. 4, the HCP already selected the lower boundary element 14 shown in a bold dashed line to be the current value 16 he wants to adjust to a new value. The selection of the lower boundary element 14 happened by way of a selection via a mouse cursor click.

Meanwhile, the graphical interface activated and displayed the HCP a virtual toolbox 17 on the graphical interface. In this basic embodiment shown in Fig. 4, the virtual toolbox comprises two options to modify the sound representation of the selected specific sound type by the hearing device. The first option is formed by a first cursor control button 18 on the keyboard that issues a "move up" command. The second option is formed by a second cursor control button 19 on the keyboard that issues a "move down" command.

Note that the HCP may be presented more options to adjust a value or several values at a time or sequentially one after another.

When looking at Fig. 2 where the graphical member 9 is no rectangle but a doodle, the HCP may select a segment of that graphical member 9 that is to be moved to a new value. Since several ways of selecting such a boundary element are available, no particular detail needs to be disclosed here.

In **figure 5****,** we see a situation where the HCP hit the first cursor control button 18 on the keyboard that issues the "move up" command several times until the selected lower boundary element 14 reached the new power level that goes along with a new value 10. As a result, the fitting software shows him in the aided audiogram the new position of the boundary element selected. In the present example, the HCP adjusted the former current value of the sound representation from about 110 dB to the new value 10 of about 100 dB with the aim to make the ringtone sound of his end user's phone be presented to the end user by his hearing devices less prominent, i.e., more silent than before the adjustment because that meets the sound perception of the end user better.

As one can see in Fig. 5, the set of further isophones 5 have now a different shape/progression within the specific chart region 8 since a second portion 21 of the representative further isophones 5a-b reaching into the selected specific chart region 8, each, is bent up slightly that its ends are moved towards the hearing threshold level curve 2 when they are modelled and displayed in the chart 1 after the fitting software calculated the result of the impact of the new value on the sound representation. Since the lower boundary element 14 of the selected specific chart region 8 was moved up in the aided audiogram, a second portion of the representation of the lowermost further isophone 5eof the set of further isophones 5 reaching into the selected specific chart region 8 is shifted up towards the hearing threshold level curve 2 more than the uppermost of the further isophone 5a because the upper boundary element of the dashed rectangle forming the graphical member 9 was not amended. In other words, the second portion of the representation of the isophones of the set of further isophones is squeezed to lie closer to one another after the adjustment and the calculation and modelling in the selected specific chart region 8.

The fitting software is programmed such that the adjustability of the existing/current value 16 in the sound representation to the new value 10 in the sound representation is limited. In this case, the HCP is prevented from moving the selected, activated lower boundary element 14 to a new value of about 60 dB as that would result in a twisting of the further isophones that would lead to an inacceptable sound representation and an inacceptable sound perception.

Fig. 5 also shows that the shape and position of a first portion of the representation of the further isophones 5a-e outside the specific chart region 8 remains essentially unaffected by the adjustment of the HCP, except in a transitional frequency range 22 where the fitting software calculated/established a transitional adaptation 23 of the representation of the isophones that reach into the selected specific chart region 8. That transitional adaptation 23 of the representation of the further isophones prevents a harsh rise of the inclination/slope of the isophones that may lead to an unnatural second sound perception of the sound type pertaining/attributed to the selected specific chart region by the end user. Since the HCP selected in this case additionally that the transitional frequency range 22 outside the specific chart region 8 shall be small only, the progression of the representation of the further isophones 5 in that transitional frequency range 22 is still fairly abrupt and he has to check with the end user on whether such an adjustment is acoustically acceptable or not. In case of the latter, the HCP may adjust the boundary element of the specific chart region to yet another new value and/or to increase the transitional frequency range 22. As a result, an adjusted portion of the representation of the isophone 26 is comparatively short with respect to the remaining part of the further isophones.

Fig. 5 further shows that the adjustment of the current value 16 of the boundary element 14 to the new value 10 also led to a slight adaptation of the progression of the second portion of the most comfortable level curve 4. The progression of the hearing threshold level curve 2 is not affected by the new value since it is too large away from the specific chart region.

Fig. 5 also presents the HCP a graphical interface displaying the representative set of further isophones 5 reaching into the specific chart region 8 with the value prior to the adjustment of the current value in the sound representation and the current functional representations of the further isophones 5a-e in a dotted line as well as the modified further isophones representing the second sound representation by way of the new functional representations of the further isophones 5a-e after the alteration to the new value. That allows the HCP with a visual means to recognize the impact of the adjustment to the new value immediately.

**Figure 6** shows essentially the same chart in the form of an aided audiogram as the one shown in Fig. 4. Different to Fig. 4, Fig. 6 shows the position and area of the specific chart regions of both the sound types "telephone" and "piano". The first specific chart region 8 is assigned to the sound type of a telephone. The first specific chart region 8 is displayed again by a dashed rectangle forming the graphical member 9. The second specific chart region 24 is assigned to the sound type of a piano. Note that the second specific chart region 24 is not selected by the HCP but is displayed in Fig. 6 by a dash-dot-dot rectangle only to explain what happens in case of overlapping chart regions that overlap one another. The overlapping region 25 is illustrated in Fig. 6 by way of a cross-hatched region.

**Figure 7** shows an alternative modelling of the effect of the new value of the lower boundary element 14 of the same graphical member 9 as the modelling leading to the isophone shape and position shown in Fig. 5. The difference to the visualized effect of the of the new functional representation of the further isophones 5a-e compared to the one of Fig. 5 resides in that the adjusted portion 26 of the representation of the isophones 5 is longer in Fig. 7. That elongation allows for a longer transitional frequency range 22 than in Fig. 5. The effect of the transitional adaptation in that the adjusted portion 26 of the representation on the further isophones 5 is that the harsh rise of the inclination/slope shown transitional frequency range 22 of Fig. 5 is now drastically flattened and smoothened in the new functional representation of the set of further isophones 5 shown in the chart 1 of Fig. 6. The further isophones 5 underwent a transitional adaptation of their shape and position inside as well as outside of the selected chart region 8 at the border zone of the selected chart region 8.

As a result, the end user would consider the second sound representation of the ringtone sound of his telephone ringing in the frequency range of about 3 kHz to about 4 kHz as meeting his preference without sacrificing the sound representation of piano music in the same frequency range of about 3 kHz to about 4 kHz as almost natural, if not as natural at all.

**Figure 8** shows a further alternative modelling and display of the effect of the new value of the lower boundary element 14 of the same graphical member 9 as the modelling leading to the isophone shape and position shown in Fig. 5. The difference to the modelling compared to the one of Fig. 5 resides in that the adjusted portion 26 of the representation of the isophones 5 is only taking place within the specific chart region 8 selected, not outside thereof in Fig. 7. The move of the transitional frequency range 22 from outside the border zone of the specific chart region 8 shown in Fig. 5 to the inside of the border zone of the specific chart region in Fig. 8 still leads to a harsh rise of the inclination/slope of the representation of the further isophones 5 because the transitional frequency range 22 is comparatively small. Nonetheless may such a solution be preferred by an end user in some situations with overlapping specific chart regions, although likely not in the present one with the sound type "piano" because piano sound extends over a very large frequency range. Anyway, it is believed that the skilled reader is getting the general teaching of the set-up of the inventive method and its effect on the sound representation.

Figure 9 illustrates the flowchart of a basic embodiment of the method promoted in this document. That method contains the following steps when explained with a flowchart:
- A first step 27 residing in providing a fitting software running on a computer device,
- A second step 28 residing in providing a chart 1 with a graphical interface and a plurality of specific chart regions 8, 24 that are arranged in a reference system of the fitting software, wherein each specific chart region 8, 24 is assigned to at least one specific sound type and is extending over a frequency range and an auditory level range, and wherein each of the specific chart regions 8, 24 comprises at least a portion of at least one further isophone 5 that is responsible for a first sound representation and thus a first sound perception of the at least one specific sound type,
- A third step 30 residing in selecting any specific chart region 8 in that chart 1 where the first sound perception of the at least one specific sound type shall be modified to a second sound perception of the at least one specific sound type for the end user,
- A fourth step 30 residing in activating on the graphical interface a virtual toolbox 17 comprising at least one option 18, 19 to alter the current functional representation of the at least one further isophone 5 that is responsible for the first sound representation of the at least one specific sound type attributed to the selected specific chart region 8 and thus the first sound perception of the at least one specific sound type,
- A fifth step 31 residing in selecting one option 18 from the options 18, 19 of step d) in the virtual toolbox 17 to alter a current value 16 that is responsible for the current functional representation of the at least one further isophone 5 in the selected specific chart region 8 to a new value 10 that is responsible for a new functional representation of the at least one further isophone 5,
- A sixth step 32 residing in altering the current value 16 to the new value 10,
- A seventh step 33 residing in calculating a second sound representation of the at least one specific sound type attributed to the selected specific chart region 8 and thus the second sound perception of the at least one specific sound type based on the new functional representation of the at least one further isophone 5 with the new value 10,
- An eight step 34 residing in displaying the new functional representation of the at least one further isophone 5 in the chart 1 or in a further chart.

In a more advanced embodiment, the method comprises an eight step 34 where the entire set of fitting parameters for the hearing device is re-calculated in the fitting software based on the new value 10 and subsequently transmitted to the hearing device to unfold the desired sound representation for the end user once the hearing devices are in use.

### LIST OF REFERENCE SYMBOLS

- 1: chart / aided audiogram
- 2: functional representation of the hearing threshold level curve (HTL)
- 3: functional representation of the uncomfortable/discomfort threshold level curve (UCL)
- 4: functional representation of the most comfortable loudness level curve (MCL)
- 5: functional representation of a set of representative further isophones
- 6: mouse-controlled cursor
- 7: graphic icon
- 8: (first) selected specific chart region
- 9: graphical member
- 10: new value
- 14: boundary element
- 15: virtual diagonal
- 16: current value
- 17: virtual toolbox
- 18: first cursor control button
- 19: second cursor control button
- 20: functional representation of a first portion of the further isophone
- 21: functional representation of a second portion of the further isophone
- 22: transitional frequency range
- 23: transitional adaptation
- 24: second specific chart region
- 25: overlapping region
- 26: functional representation of a (range with the) adjusted portion of the isophone
- 27: first step
- 28: second step
- 29: third step
- 30: fourth step
- 31: fifth step
- 32: sixth step
- 33: seventh step
- 34: eight step

## Claims

1. A method for fitting a hearing device to an end user according to an end user preference by modifying a sound representation and thus a sound perception of sound types for the end user, the method comprising the steps of:
a. Providing a fitting software running on a computer device,
b. Providing a chart (1) with a graphical interface and a plurality of specific chart regions (8, 24) that are arranged in a reference system of the fitting software, wherein each specific chart region (8, 24) is assigned to at least one specific sound type and is extending over a frequency range and an auditory level range, wherein each of the specific chart regions (8, 24) comprises at least a portion of at least one further isophone (5) that is responsible for a first sound representation and thus a first sound perception of the at least one specific sound type,
c. Selecting any specific chart region (8) in that chart (1) where the first sound perception of the at least one specific sound type shall be modified to a second sound perception of the at least one specific sound type for the end user,
d. Activating on the graphical interface a virtual toolbox (17) comprising at least one option (18, 19) to alter the current functional representation of the at least one further isophone (5) that is responsible for the first sound representation of the at least one specific sound type attributed to the selected specific chart region (8) and thus the first sound perception of the at least one specific sound type,
e. Selecting one option (18) from the options (18, 19) of step d) in the virtual toolbox (17) to alter a current value (16) that is responsible for the current functional representation of the at least one further isophone (5) in the selected specific chart region (8) to a new value (10) that is responsible for a new functional representation of the at least one further isophone (5),
f. Altering the current value (16) to the new value (10),
g. Calculating a second sound representation of the at least one specific sound type attributed to the selected specific chart region (8) and thus the second sound perception of the at least one specific sound type based on the new functional representation of the at least one further isophone (5) with the new value (10),
h. Displaying the new functional representation of the at least one further isophone (5) in the chart (1) or in a further chart,
i. Defining a new set of fitting parameters for the hearing device by the fitting software in consideration of the new functional representation of the at least one further isophone (5),
j. Transmitting the new set of fitting parameters from the fitting software to the hearing device and storing it in the hearing device.

2. The according to claim 1, wherein the chart (1) comprises an aided audiogram, and wherein the new functional representation of the at least one further isophone (5) in step h) of claim 1 displays a new shape and/or a new position of the at least one further isophone that is extending through the selected specific chart region or reaching in the selected specific chart region (8).

3. Method according to any one of the previous claims, wherein the specific chart region (8) is selected by way of a graphical member (9) of the following group:
a. A circle
b. A triangle
c. A trapezoid,
d. An ellipsoid
e. A rectangle
f. A rounded rectangle
g. A freestyle shape (9).

4. Method according to claim 3, wherein the selection of the specific chart region (8) is performed by a cursor (6) selection on the computer device.

5. Method according to claim 4, wherein the graphical member (9) is adjustable by cursor control buttons (18, 19) on a keyboard.

6. Method according to claim 4, wherein the graphical member (9) is adjustable by a computer mouse-controlled cursor (6) in that a boundary element (14) of the specific chart region (8) is dragged from a current position/value (16) to a new position/value (10).

7. Method according to any one of the previous claims, wherein the virtual toolbox (17) comprises at least one of the following options for a sound modification function:
a. A frequency compression,
b. An adaptive function,
c. An acoustic optimization performed by a neural network,
d. Static gain shaping means.

8. Method according to any one of the previous claims, wherein the specific chart region (8) is graphically highlighted in the chart (1) once it is selected in step c) of claim 1.

9. Method according to any one of the previous claims, wherein at least one specific chart region (8) of the plurality of specific chart regions (8, 24) in the chart (1) is tagged with an identifier (7) that graphically represents a sound source of a specific sound type, and wherein the selection of the specific chart region (8) attributed to that specific sound type is selectable by selecting the identifier (7).

10. Method according to claim 2, wherein the current functional representation of the at least one further isophone (5) representing the first sound representation at step b) of claim 1 is displayed along with the new functional representation of the at least one further isophone (5) for at least a limited amount of time.

11. Method according to any one of the previous claims, wherein in case where there are two specific chart regions (8, 24) that are overlapping one another in the chart, the alterability of the current value (16) to the new value (10) is limited to a pre-programmed threshold.

12. Method according to claim 2, wherein in case that the selected specific chart region (8) overlaps with a neighboring chart region (24) corresponding to another sound type in an overlapping region (25), the fitting software will establish a transitional adaptation (23) of the at least one isophone (5) in a transitional frequency range (22) at a border zone of the selected specific chart region (8), wherein the transitional adaptation (23) is designed by the fitting software such that it connects a first portion (20) of the at least one further isophone that is located outside the selected chart region (8) and that is only partially affected by the adjustment to a second portion (21) of the same at least one further isophone (5) leading through or into the selected specific chart region (8) such that an inclination of a transitional adaptation (23) of the at least one further isophone at the border zone remains below a predefined threshold.

13. Method according to claim 12, wherein the transitional adaptation (23) is performed to the at least one further isophone (5) in the transitional frequency range (22) is one of
a. Outside the selected specific chart region (8),
b. Inside the selected specific chart region (8),
c. Inside as well as outside of the selected specific chart region at the border zone of the selected chart region (8).

14. Method according to any one of the previous claims, wherein the reference system of the fitting software comprises a functional representation of at least two further isophones of the hearing level of a person with standardized normal hearing such that a comparison of the sound perception of specific sound types for the end user with the impaired hearing to the sound perception of the specific sound types for the person with the normal hearing is enabled.

15. Hearing device that is fitted with a method according to anyone of the previous claims, wherein the new set of fitting parameters is stored in the hearing device.
